# EUROPEAN PATENT APPLICATION

(11) **EP 2 033 709 A1**
(43) Date of publication of application: **11.03.2009**
(21) Application number: 07767312.7
(22) Date of filing: 21.06.2007
(51) Int. Cl.: B01J 37/00, B01J 37/08, B01J 37/34, C23G 1/24, C23G 5/024, F01N 3/28

(54) **METAL BASE, METHOD FOR PRODUCING THE SAME, AND CATALYST**

(30) Priority: 23.06.2006 JP 2006174240; 10.05.2007 JP 2007125394
(71) Applicant: Nissan Motor Co., Ltd., Kanagawa 221-0023 (JP)
(72) Inventor: TAKAYA, Masahiro, 1-1Morinosatoaoyama, Atsugi-shi, Kanagawa 243-0123, (JP); MIYAZAKI, Kiyoshi,, 1-1Morinosatoaoyama, Atsugi-shi, Kanagawa 243-0123, (JP); SEKIBA, Toru,, 1-1Morinosatoaoyama, Atsugi-shi, Kanagawa 243-0123, (JP); HANAKI, Yasunari,, 1-1Morinosatoaoyama, Atsugi-shi, Kanagawa 243-0123, (JP); YAMAUCHI, Takeshi,, 1-1Morinosatoaoyama, Atsugi-shi, Kanagawa 243-0123, (JP)
(74) Representative: Görz, Ingo
(86) International application number: PCT/JP2007/062485
(87) International publication number: WO 2007/148748

(57) **Abstract**

A metal base including a surface portion containing aluminum. The metal base is formed with at least either of recesses and projections at a surface of the metal base and therefore has a planar pattern formed by the at least either of the recesses and projections when viewed from above the surface of the metal base, in which the planar pattern is a scale-like pattern.

## Description

### TECHNICAL FIELD

The present invention relates to a metal base, a method for producing the same and a catalyst, and more particularly to a metal base having a surface structure in which a surface portion contains aluminum and is formed with at least either of recesses and projections, a method for producing the same and a catalyst using the same.

### BACKGROUND ART

Hitherto, there have been made studies of evenly coating a metal substrate with a catalyst layer-forming slurry which contains a noble metal (as disclosed in Patent Documents 1 and 2).
Patent Document 1: Japanese Patent Provisional Publication No. 10-2603
Patent Document 2: Japanese Patent Provisional Publication No. 8-332394

### SUMMARY OF THE INVENTION

However, the catalyst layer-forming slurry which contains the noble metal is repelled on a metal foil when the metal substrate is coated with the same, which has brought about a problem of unevenness of a formed catalyst layer.
Such an unevenness of the formed catalyst layer deteriorates an adhesive property, which has resulted in further problems, e.g. peeling of the catalyst layer and reduction of a catalyst performance.

In view of the above problems encountered in conventional techniques, an object of the present invention is to provide: a metal base which can be improved in adhesive property not only against the catalyst layer-forming slurry but also against the formed catalyst layer; a method for producing the same; and a catalyst using the same.

As a result of eagerly making research and development in order to achieve the above object, the present inventor found that the above object can be achieved by using a metal base whose surface portion contains aluminum and is formed with at least either of recesses and projections and by designing the metal base such that a planar pattern formed by the at least either of the recesses and the projections is a scale-like pattern when viewing a surface of the metal base from the above, with which the present invention was brought into completion.

A metal base according to the present invention comprises a surface portion containing aluminum, in which the metal base is formed with at least either of recesses and projections at a surface of the metal base and therefore has a planar pattern formed by the at least either of the recesses and projections when viewed from above the surface of the metal base. Then, the planar pattern is a scale-like pattern.

Additionally, a first embodiment of the metal base of the present invention contains the aluminum over the whole of the surface portion of the metal base.

Further, a second embodiment of the metal base of the present invention contains hydroxyl groups at the surface portion thereof, in which an abundance of the hydroxyl groups is not less than 0.01 in terms of an absorbance measured according to an infrared spectroscopic analysis.

Furthermore, a third embodiment of the metal base of the present invention is formed with the at least either of recesses and projections over the whole of the surface of the metal base.

Still further, in a fourth embodiment of the metal base of the present invention, the at least either of the recesses and projections which form the scale-like pattern of the metal base have a diameter when formed circularly or have a major axis when formed ovally, of 100 to 500 nm.

Still further, a catalyst according to the present invention comprises: a metal base as discussed above; and a catalytic material.

Still further, a method for producing a metal base according to the present invention comprises carrying out a treatment with one of ultrasound and microwaves on a metal base containing at least aluminum while immersing the metal base in one of an alcohol-based solvent and a hydrocarbon-based solvent.

According to the present invention, the metal base comprises a surface portion containing aluminum. Additionally, the metal base is formed with at least either of recesses and projections at a surface of the metal base and therefore has a planar pattern formed by the at least either of the recesses and projections when viewed from above the surface of the metal base, in which the planar pattern is a scale-like pattern. With this, it is allowed to provide a metal base which can be improved in adhesive property not only against the catalyst layer-forming slurry but also against the formed catalyst layer, a method for producing the same and a catalyst using the same.

### DETAILED DESCRIPTION OF THE INVENTION

Hereinafter, a metal base according to the present invention will be discussed. In this specification and the claims, all percentages (%) of concentrations, contents and the like are by mass unless otherwise specified.

As discussed above, the metal base according to the present invention comprises a surface portion containing aluminum. Additionally, the metal base is formed with at least either of recesses and projections at a surface of the metal base and therefore has a planar pattern formed by the at least either of the recesses and projections when viewed from above the surface of the metal base, in which the planar pattern is a scale like pattern.
With this arrangement, it is allowed to improve a metal base in adhesive property not only against the catalyst layer-forming slurry but also against the formed catalyst layer. Additionally, oxides containing aluminum are typical base materials for catalytic components and may carry only a catalytic component.
"A surface portion of the metal base" is a portion of the metal base which portion reaches a depth of about 4 nm from an outermost surface of the metal base.
Further, examples of the metal base are a metal fiber, a metal foil, a metal filter, a metal substrate and the like; however, the metal base is not limited to the above forms.
The metal foil may be for example a metal in the form of a mesh. Moreover, examples of the metal filter are those formed of the metal fiber by a paper manufacturing method and those formed of a foam metal. Further, examples of the metal substrate are those of an integral type formed incorporating the metal foil.

In the present invention, it is preferable that aluminum is contained over the whole of the surface portion.
With this structure, it is allowed to further improve the adhesive property not only against the catalyst layer-forming slurry but also against the formed catalyst layer, and additionally to more evenly form the catalyst layer on a whole surface of the metal base such as the metal fiber and the metal foil.

Moreover, it is preferable in the present invention that the surface portion of the metal base contains hydroxyl groups. The abundance of the hydroxyl groups is preferably not lower than 0.01, more preferably higher than 0.01, much more preferably higher than 0.015 in terms of an absorbance measured according to an infrared spectroscopic analysis.
When the abundance of the hydroxyl groups contained in the surface portion is not lower than 0.01 in terms of the absorbance measured according to the infrared spectroscopic analysis, the adhesive property can be further improved not only against the catalyst layer-forming slurry but also against the formed catalyst layer.
The absorbance discussed in this specification was determined upon a baseline correction in which a value measured by using a not-yet-treated metal base (which will be discussed below) as be the zero standard.

It is further preferable in the present invention that at least either of recesses and projections or both the recesses and the projections are formed over the whole of the surface of the metal base.
With this arrangement, it is allowed to further improve the adhesive property not only against the catalyst layer-forming slurry but also against the formed catalyst layer, and additionally to more evenly form the catalyst layer on the whole surface of the metal base such as the metal fiber and the metal foil.

In the present invention, it is further preferable that the at least either of the recesses and projections which form the scale-like pattern of the metal base have a diameter when formed circularly or have a major axis when formed ovally, of 100 to 500 nm.
With this arrangement, it is allowed to further improve the adhesive property not only against the catalyst layer-forming slurry but also against the formed catalyst layer, and additionally to more evenly form the catalyst layer at the whole surface of the metal base such as the metal fiber and the metal foil.
When the diameter or the major axis is less than 100 nm, however, the effect of improving the adhesive property is sometimes reduced. When the diameter or the major axis exceeds 500 nm, the catalyst layer may be clogged.
"A diameter when formed circularly or a major axis when formed ovally" means, when a scale imaginarily specified in the scale-like pattern does not have any parts which seem to be hidden beneath adjacent scales and therefore forms a circle or an ellipse, the diameter of the circle or the major axis of the ellipse. Additionally, it means, when the imaginary scale has any parts which seem to be hidden beneath the adjacent scales and when the parts are suitably complemented with a contour to form a circle or an ellipse, the diameter of the circle or the major axis of the ellipse.

Then, a catalyst according to the present invention will be discussed.
As discussed above, the catalyst of the present invention comprises the above-mentioned metal base of the present invention and a catalytic material.
With this arrangement, the adhesive property of the catalytic material is improved and additionally a catalytic performance is readily improved.

Examples of an embodiment of the catalyst are an exhaust gas purifying catalyst comprising: a metal substrate for carrying catalyst which substrate is one example of the above-discussed metal base; and a catalyst layer formed on a surface of a metal foil provided to the metal substrate, and containing a noble metal which is one example of catalytic materials.
With this arrangement, the adhesive property of the formed catalyst layer which contains the noble metal is improved.
Examples of components of the catalyst layer are: noble metals such as platinum, palladium and rhodium; oxides able to function as a promoter, containing cerium, zirconium, alkali metals, alkaline-earth metals or the like; and oxides containing alumina or the like and used as a base material. However, the examples are not limited to these.

Now, a method for producing the metal base of the present invention will be discussed.
The method for producing the metal base of the present invention, as discussed above, is an embodiment of a method for producing the metal base of the present invention and comprises the step of carrying out a treatment with one of ultrasound and microwaves on a metal base (or a not-yet-treated metal base) containing at least aluminum while immersing the metal base in one of an alcohol-based solvent and a hydrocarbon-based solvent, thereby obtaining a desired metal base.
It is preferable that the not-yet-treated metal base contains aluminum. Other components are not particularly limited, and may be conventionally known ones such as: a metal substrate formed of a ferritic stainless steel (available from JFE Steel Corporation under the trade name of R20-5USR with a composition of carbon, silicon, manganese, chromium, aluminum and lanthanoids); a metal substrate available from CALSONIC KANSEI CORPORATION, EMITEC or USUI KOGYO; and a metal filter, a metal foil and a metal fiber which are formed of a ferritic stainless steel having an aluminum content.

With this arrangement, the metal base improved in adhesive property not only against the catalyst layer-forming slurry but also against the formed catalyst layer can be readily obtained.
When reduction/oxidation reaction occurs between the alcohol-based solvent and the metal base thereby forming an aluminum precipitation on the surface portion of the metal base, babbles that has been resident at the surface of the metal base can be removed so as to allow the alcohol-based solvent or the like to spread over the whole of the surface of the metal base while providing a field of high temperature conditions just like the time of conducting heat treatment by applying a cavitation derived from ultrasound treatment, which is at the present moment considered to be the reason for the above-mentioned adhesive property improvement.

It is preferable in the present invention that the alcohol-based solvent is a hydrophilic alcohol or contains the hydrophilic alcohol. Such a hydrophilic alcohol is to act on the not-yet-treated metal base, so as to form aluminum precipitation over the whole of the surface portion of the metal base and to evenly form recesses and/or projections over the whole of the surface of the metal base. With this, the adhesive property can be further improved not only against the catalyst layer-forming slurry but also against the formed catalyst layer. If the hydrophilic alcohol is used, the catalyst layer can be more evenly formed on the surface of the metal base such as the metal fiber and the metal foil by virtue of the reduction action.
"The hydrophilic alcohol" discussed in this specification refers to those mixed with water uniformly and entirely.

It is further preferable in the present invention that the alcohol-based solvent contains the hydrophilic alcohol in an amount ranging from 70 to 99 %, more preferably from 90 to 99 %. With a hydrophilic alcohol content of from 70 to 99 %, recesses and/or projections are particularly uniformly formed over the whole of the surface of the metal base, so that the adhesive property can be particularly improved not only against the catalyst layer-forming slurry but also against the formed catalyst layer. Additionally, the catalyst layer can be particularly evenly formed on the surface of the metal base. A hydrophilic alcohol content of less than 70 % sometimes fails to form the catalyst layer uniformly on the surface of the metal base.
Examples of other components are typically water; however, not limited to water and may include ethylene, hexane and isopropyl alcohol.

Examples of the hydrophilic alcohol are methanol, ethanol, 1-propanol, 2-propanol, and any combinations thereof; however, the examples are not limited to these and may include ethylene, hexane, ethylene glycol, glycerin and the like.

In the present invention, a time of the treatment carried out with ultrasound or microwaves is preferably set within a range that an amount of precipitation of iron or chromium is less than that of aluminum, though not limited to a particular one.
With such a time of the treatment, the metal base improved in adhesive property not only against the catalyst layer-forming slurry but also against the formed catalyst layer is readily obtained.

Additionally, it is preferable in the present invention that calcination is performed after carrying out the treatment with ultrasound or microwaves.
With this arrangement, the metal base further improved in adhesive property not only against the catalyst layer-forming slurry but also against the formed catalyst layer is readily obtained.
Calcining conditions may be suitably modified, in which an atmosphere may be either the inert one (such as argon and nitrogen) or the oxidizing one (such as air). Further, a calcination temperature may be, for example, from about 300 to 500 °C, and a time of the calcination may be from 0.5 to 1.0 hour.
Moreover, it is also preferable that the calcination temperature is not lower than 800 °C and not higher than a temperature obtained by multiplying a melting point of the metal base (the not-yet-treated metal base) containing at least aluminum by 0.9. With this also, the metal base further improved in adhesive property not only against the catalyst layer-forming slurry but also against the formed catalyst layer is readily obtained.

### EXAMPLES

The present invention will be more readily understood with reference to Examples and Comparative Examples.

### (EXAMPLE 1-1)

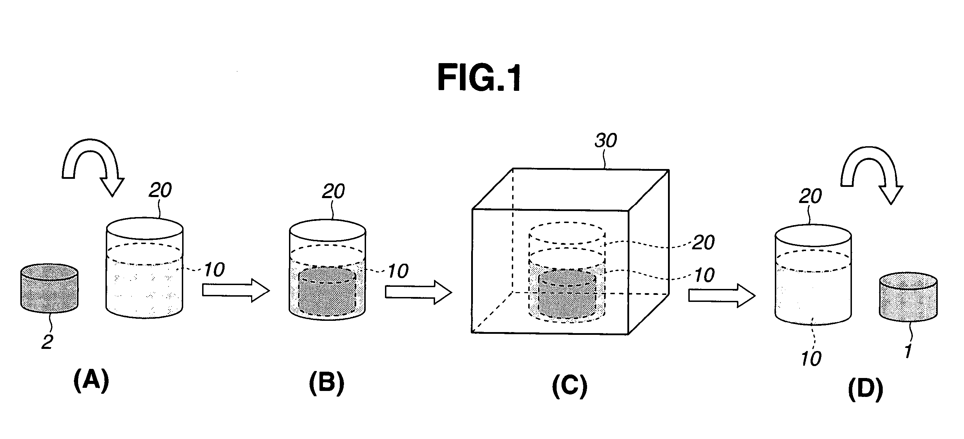

Fig. 1 is an illustration of an embodiment of a method for producing a metal substrate for carrying catalyst, of Example 1-1. First of all, not-yet-treated metal substrate 2 (available from CALSONIC KANSEI CORPORATION), ethanol 10 (concentration: 99 %) which is an example of an alcohol-based solvent, and vessel 20 for accommodating metal substrate 2 and ethanol 10 were prepared (see portion (A) of Fig. 1). Then, not-yet-treated metal substrate 2 was immersed in ethanol 10 held in vessel 20 (see portion (B) of Fig. 1). Thereafter, vessel 20 was disposed in ultrasound treatment apparatus 30. Upon being subjected ultrasound treatment for 15 minutes (see portion (C) of Fig. 1), not-yet-treated metal substrate 2 was pulled out of vessel 10 (see portion (D) of Fig. 1) and then subjected to air-drying for a day, drying at 130 °C for 1 hour, and calcination in air at 400 °C for 30 minutes in order mentioned, thereby obtaining metal substrate 1 for carrying catalyst, of Example 1-1.

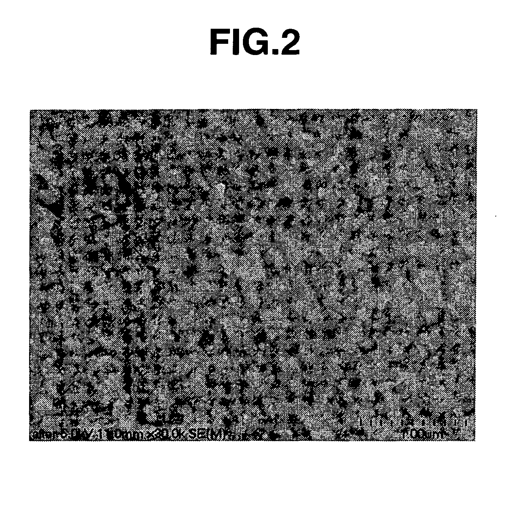

The thus obtained metal substrate for carrying catalyst was observed by a scanning electron microscope (SEM) on a surface of a metal foil that the metal substrate for carrying catalyst includes. Fig. 2 is a photograph taken by SEM, of the surface of the metal foil of the metal substrate for carrying catalyst of Example 1-1.
It is found from Fig. 2 that minute recesses and projections are formed over the whole of the surface of the metal foil.

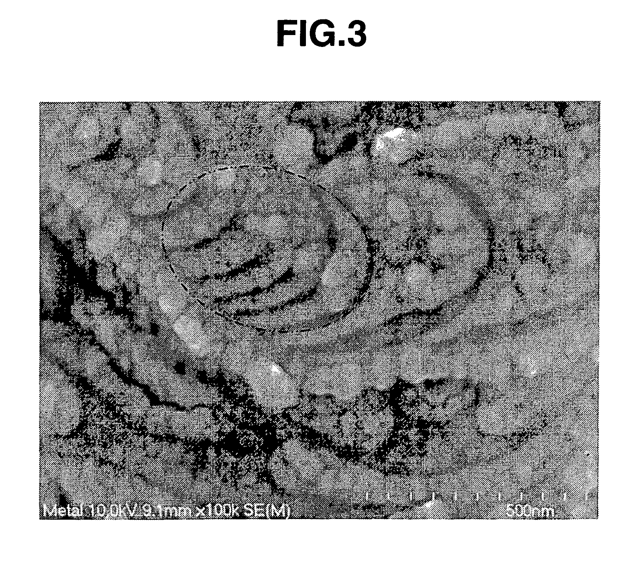

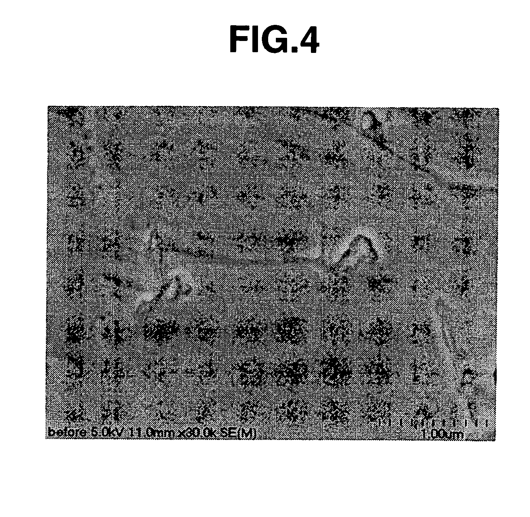

Fig. 3 is another photograph of Example 1-1, of the surface of the metal foil of the metal substrate for carrying catalyst, taken by SEM under higher magnification than that in Fig. 2.
It is found from Fig. 3 that minute recesses and projections are formed over the whole of the surface of the metal foil so as to form a scale-like pattern over the whole of the surface of the metal foil. In the scale-like pattern of the SEM photograph, a contour of a scale including a part which seems to be hidden is indicated by a two-dot chain line.
Additionally, Fig. 4 is a SEM photograph of a surface of a metal foil of a not-yet-treated metal substrate.

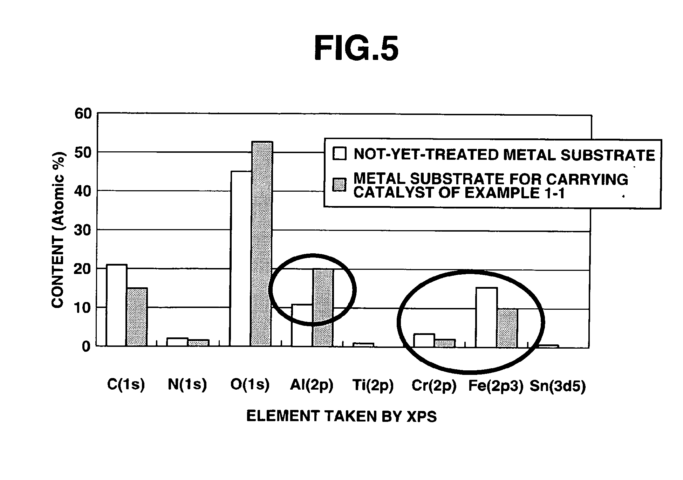

A surface portion of the metal foil of the obtained metal substrate for carrying catalyst and a surface portion of the metal foil of the not-yet-treated metal substrate were separately measured by X-ray photoelectron spectroscopy (XPS). Fig. 5 compares the metal substrate for carrying catalyst of Example 1-1 with the not-yet-treated metal substrate in a graph showing the relationship between elements detected by XPS and contents thereof in the surface portion of the metal foil.
From an increase in aluminum [A1 (2p)] as shown in Fig. 5, it is found that an aluminum content of the surface portion of the obtained metal substrate for carrying catalyst is increased owing to oxidation or the like, as compared with that of the surface portion of the not-yet-treated metal substrate.
Additionally, it is found from decreases in chromium [Cr (2p)] and in iron [Fe (2p3)] that status of chromium and iron is changed from metal to oxide.

### (EXAMPLES 1-2 and 1-3)

A procedure of Example 1-1 was repeated with the exception that an ethanol (concentration: 80 %, other components (H₂O: 20 %)) and another ethanol (concentration: 60 %, other components (H₂O: 40 %)) were used in Examples 1-2 and 1-3, respectively, in place of the ethanol used in Example 1-1, thereby obtaining metal substrates of Examples 1-2 and 1-3.
It was confirmed by observing a surface of a metal foil of the obtained metal substrates with SEM that minute recesses and projections were formed over the whole of the surface of the metal foil as in the case of Example 1-1.

### (EXAMPLES 1-4 and 1-5)

A procedure of Example 1-1 was repeated with the exception that 2-propanol (concentration: 99 %, other components (impurities: 1 %)) and hexane (available from Wako Pure Chemical Industries, Ltd.) were used in Examples 1-4 and 1-5, respectively, in place of the ethanol used in Example 1-1, thereby obtaining metal substrates of Examples 1-4 and 1-5.

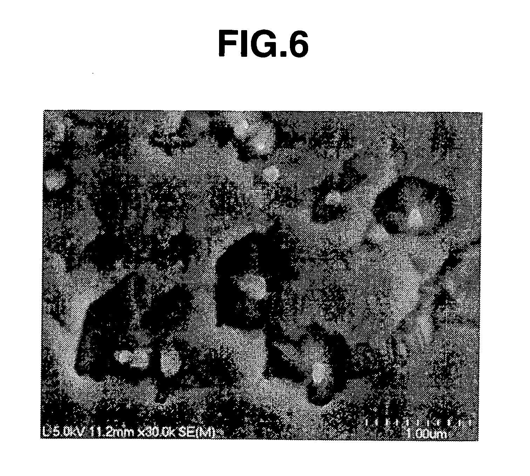

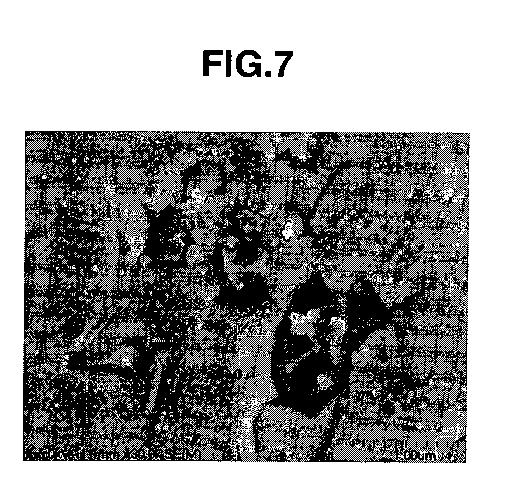

Figs. 6 and 7 are SEM photographs of a surface of a metal foil of the metal substrate for carrying catalyst of Examples 1-4 and 1-5.

### (EXAMPLE 1-6)

A procedure of Example 1-1 was repeated with the exception that 2-propanol (concentration: 99 %, other components (impurities: 1 %)) was used in place of the ethanol used in Example 1-1 and that the step of calcination of 400 °C for 30 minutes was not taken, thereby obtaining a metal substrate of Example 1-6.
Fig. 8 is a SEM photograph of a surface of a metal foil of the metal substrate for carrying catalyst of Example 1-6.

### (COMPARATIVE EXAMPLE 1-1)

A procedure of Example 1-1 was repeated with the exception that acetone (available from Wako Pure Chemical Industries, Ltd.) was used in place of the ethanol used in Example 1-1, thereby obtaining a metal substrate of Comparative Example 1-1.
Fig. 9 is a SEM photograph of a surface of a metal foil of the metal substrate for carrying catalyst of Comparative Example 1-1.

### (COMPARATIVE EXAMPLE 1-2)

The not-yet-treated metal substrate used in Example 1-1 was calcined in air at 400 °C for 30 minutes, thereby obtaining a metal substrate of Comparative Example 1-2.
Fig. 10 is a SEM photograph of a surface of a metal foil of the metal substrate for carrying catalyst of Comparative Example 1-2.

### [PERFORMANCE EVALUATIONS]

### (Adhesive Property Evaluation 1)

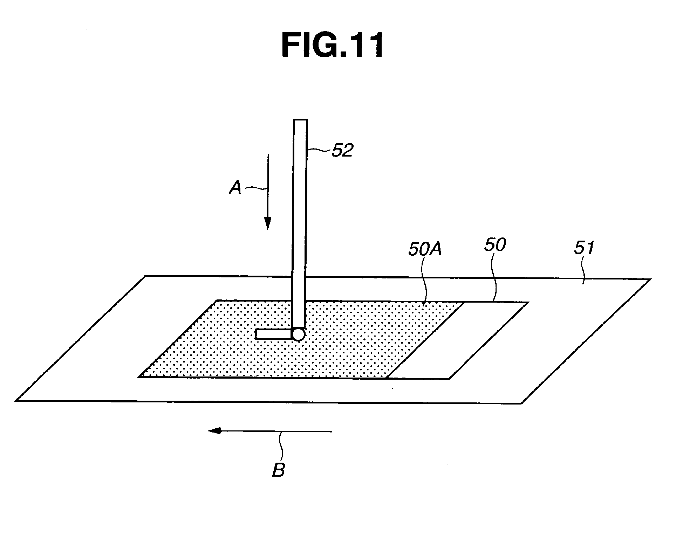

By using the metal substrates for carrying catalyst and the not-yet-treated metal substrate of Examples 1-1 and 1-4 to 1-6 and Comparative Examples 1-1 and 1-2, adhesive property evaluation 1 was conducted.
Fig. 11 is a perspective view for explaining the general outline of the adhesive property evaluation. As shown in Fig. 11, test sample 50 was prepared in such a manner as to form catalyst layer 50A on a piece cut out of each metal substrate.
Test sample 50 was disposed on testing machine table 51 and scratch stick 52 was disposed on a portion to be measured, and then a load was applied to scratch stick 52 in the direction indicated in Fig. 11 by arrow A. In addition to this, testing machine table 51 was moved in the direction indicated by arrow B at a uniform speed. This operation was repeated with changing the portion to be measured, while adjusting the load by varying a weight (not shown) or by increasing the weight. Then, the weight with which catalyst layer 50A was completely peeled off was measured. Results obtained therefrom are shown in Table 1.
In Table 1, "A", "B", "C" and "D" denote that the weight was not less than 3.5 g, not less than 2.5 g, not less than 2 g and less than 2 g, respectively.
Additionally, "Reference Example 1" as shown in Table 1 is an example obtained by performing the evaluation by using the not-yet-treated metal substrate as it is as a metal substrate having a catalyst layer.

**[TABLE 1]**

| | Result of Adhesive Property Evaluation |
|---|---|
| Example 1-1 | A |
| Example 1-4 | B |
| Example 1-5 | B |
| Example 1-6 | B |
| Comparative Example 1-1 | C |
| Comparative Example 1-2 | D |
| Reference Example 1 | C |

It is apparent from Table 1 that the most effective one of currently available water-soluble alcohols is ethanol.

### (Adhesive Property Evaluation 2)

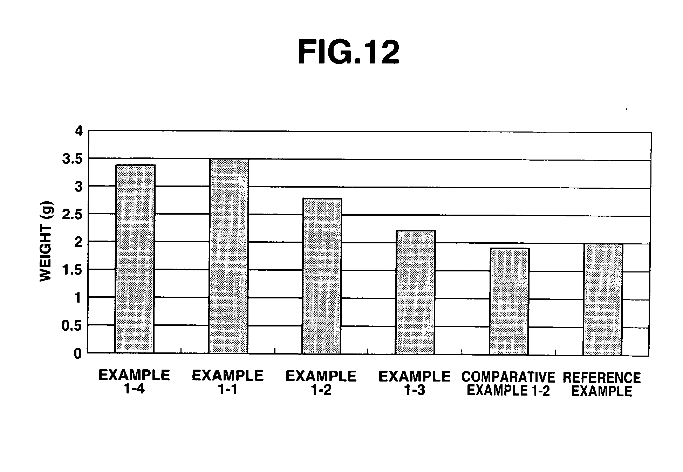

By using the metal substrates for carrying catalyst and the not-yet-treated metal substrate of Examples 1-1 to 1-4 and Comparative Example 1-1, adhesive property evaluation 2 was conducted under the same test conditions as those employed in adhesive property evaluation 1. Results obtained therefrom are shown in Fig. 12.
Fig. 12 is a graph showing a weight with which a catalyst layer of each of the Examples is completely peeled off.
Additionally, "Reference Example 1" as shown in Fig. 12 is the example obtained by performing the evaluation by using the not-yet-treated metal substrate as it is as the metal substrate having the catalyst layer.
It is confirmed from Fig. 12 that the closer to 100 % pure the alcohol concentration is, the better effect is exhibited.

### (EXAMPLE 2-1)

A not-yet-treated metal substrate (available from CALSONIC KANSEI CORPORATION, cpsi: 600, volume: 1L), ethanol (concentration: 99 %) and a vessel for accommodating the metal substrate and the ethanol were prepared. The not-yet-treated metal substrate was immersed in the ethanol held in the vessel and then subjected to ultrasound treatment for 15 minutes. Thereafter, the not-yet-treated metal substrate was subjected to air-drying for a day, drying at 130 °C for 1 hour, and calcination in air at 400 °C for 30 minutes in order mentioned, thereby obtaining a metal substrate for carrying catalyst.
Upon applying a catalyst layer-forming slurry which contains a noble metal such as platinum on the metal substrate and then removing an excessive slurry therefrom, the metal substrate for carrying catalyst was dried and calcined thereby obtaining an exhaust gas purifying catalyst of Example 2-1 having an amount of coat of 200 g and an amount of the noble metal of 1.4 g/L. Specifications of the obtained exhaust gas purifying catalyst are shown in Table 2.

### (COMPARATIVE EXAMPLES 2-1 to 2-5)

In place of the not-yet-treated metal substrate used in Example 1, not-yet-treated metal substrates (available from CALSONIC KANSEI CORPORATION, volume: 1L) of 1200 cpsi, 900 cpsi, 600 cpsi, 300 cpsi and 200 cpsi were used in Comparative Examples 2-1 to 2-5, respectively. Upon applying the catalyst layer-forming slurry similar to Example 1 on the metal substrates and then removing the excessive slurry therefrom, the metal substrates were dried and calcined thereby obtaining exhaust gas purifying catalysts of Comparative Examples 2-1 to 2-5 as shown in Table 2.

**[TABLE 2]**

| | Number of Cells (cpsi) | Amount of Catalyst Layer or Coat (g) | Amount of Nobel Metal (g/L) | Volume (L) | Remarks |
|---|---|---|---|---|---|
| Example 2-1 | 600 | 200 | 1.4 | 1 | Treated |
| Comparative Example 2-1 | 1200 | 200 | 1.4 | 1 | Not treated |
| Comparative Example 2-2 | 900 | 200 | 1.4 | 1 | Not treated |
| Comparative Example 2-3 | 600 | 200 | 1.4 | 1 | Not treated |
| Comparative Example 2-4 | 300 | 200 | 1.4 | 1 | Not treated |
| Comparative Example 2-5 | 200 | 350 | 1.4 | 1 | Not treated |

### [PERFORMANCE EVALUATIONS]

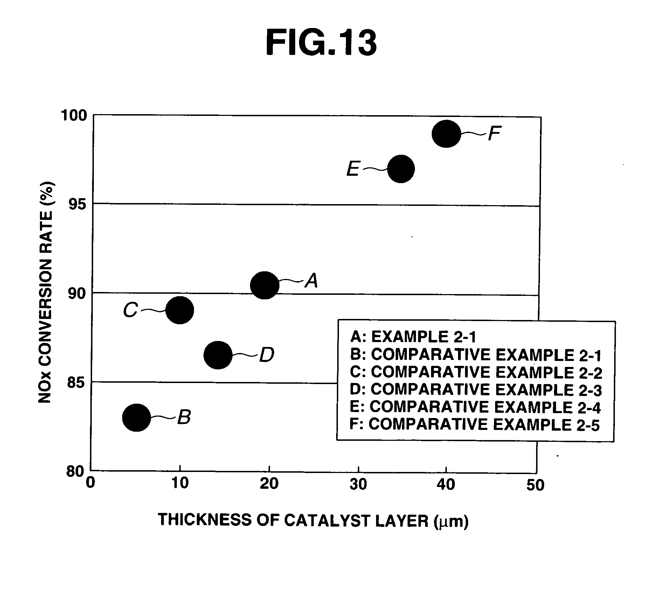

A NOx conversion rate was measured by using the above-mentioned exhaust gas purifying catalyst of each of the Examples under the conditions as follows. Results obtained therefrom are shown in Fig. 13. Fig. 13 is a graph showing the relationship between the thickness of the catalyst layer and a NOx conversion rate, in each of the Examples.

(Test Conditions)
- Vehicle evaluation (an automotive vehicle available from NISSAN MOTOR CO.,LTD., Mpi, four-cylinder engine, 1800 cc)
- Evaluation mode: North America LA4-CH
- The NOx conversion rate was measured with gases exhausted from an outlet of engine and from a tailpipe.
- Location of the catalyst: Underfloor

It is found from Fig. 13 that an improvement in performance is achieved by increasing the adhesive property between the metal foil and the catalyst layer while making the catalyst layer thick.

### (EXAMPLE 3-1)

A not-yet-treated metal fiber subjected to heat treatment at 700 °C for 30 minutes, ethanol (concentration: 99 %) which is an example of alcohol-based solvents and a vessel for accommodating the metal fiber and the ethanol were prepared. The not-yet-treated metal fiber was immersed in the ethanol held in the vessel. Thereafter, the vessel was disposed in a ultrasound treatment apparatus, in which the not-yet-treated metal fiber was subjected to ultrasound treatment for 30 minutes. The not-yet-treated metal fiber was pulled out of the vessel and then subjected to air-drying for a day, drying at 130 °C for 1 hour, and calcination in air at 400 °C for 30 minutes in order mentioned, thereby obtaining a fibrous metal base of Example 3-1.

### (COMPARATIVE EXAMPLE 3-1)

The not-yet-treated metal fiber used in Example 3-1 was calcined in air at 700 °C for 30 minutes, thereby obtaining a fibrous metal base of Comparative Example 3-1.

### (COMPARATIVE EXAMPLE 3-2)

The not-yet-treated metal fiber used in Example 3-1 was calcined in air at 850 °C for 30 minutes, thereby obtaining a fibrous metal base of Comparative Example 3-2.

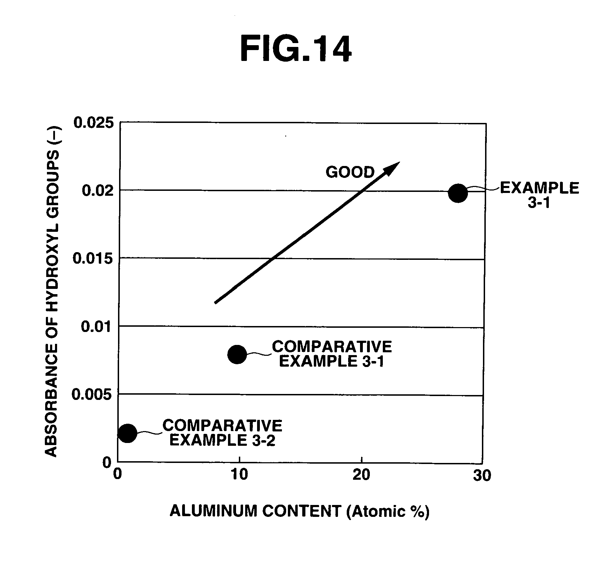

By using the above-mentioned fibrous metal bases and applying XPS and Fourier transform infrared spectroscopy (FTIR), an aluminum (Al) content (atomic %) in a surface portion of each metal base and an abundance (or an absorbance) of hydroxyl groups contained in the surface portion were measured. Results obtained therefrom are shown in Fig. 14.
Fig. 14 is a graph of the relationship between an aluminum (Al) content (atomic %) in each examples' surface portion and an abundance (or an absorbance) of the hydroxyl groups contained in the surface portion.
"The absorbance of the hydroxyl groups" was determined upon a baseline correction in which a value obtained by using the not-yet-treated metal fiber as it is (hereinafter referred to as "Reference Example 2") was regarded as the zero standard.

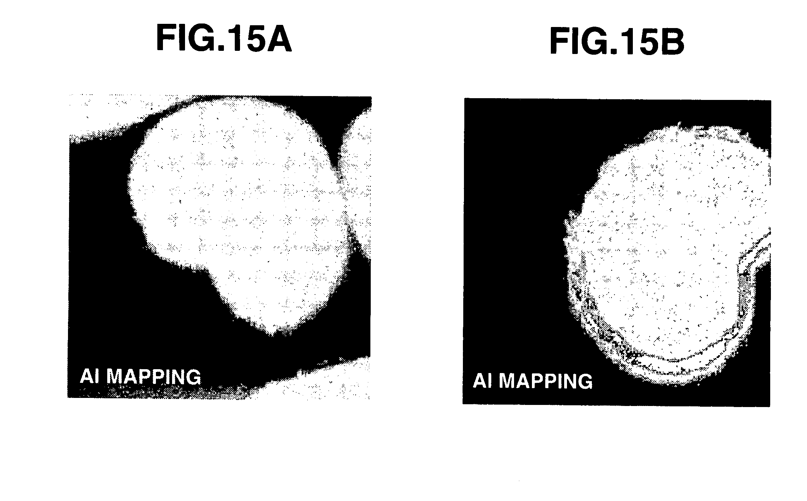

Additionally, electron probe microanalysis (EPMA) was conducted on the above-mentioned fibrous metal bases of Example 3-1 and Reference Example 2, thereby measuring an aluminum distribution. Results obtained therefrom are shown in Figs. 15A and 15B.
Figs. 15A and 15B are results of measuring an aluminum distribution (or A1 mapping) by using EPMA in Example 3-1 and Reference Example 2, respectively.
In the above figures a portion where aluminum exists is indicated by red color, and therefore it is found that aluminum is contained in the surface portion in Example 3-1 carried out according to the present invention.

### (EXAMPLE 4-1)

A not-yet-treated metal foil subjected to heat treatment at 1000 °C for 30 minutes, ethanol (concentration: 99 %) which is an example of alcohol-based solvents, and a vessel for accommodating these were prepared. The not-yet-treated metal foil was immersed in the ethanol held in the vessel. Thereafter, the vessel was disposed in a ultrasound treatment apparatus, in which the not-yet-treated metal foil was subjected to ultrasound treatment for 5 minutes. The not-yet-treated metal foil was pulled out of the vessel and then subjected to air-drying for a day, drying at 130 °C for 1 hour, and calcination in air at 400 °C for 30 minutes in order mentioned, thereby obtaining a metal foil of Example 4-1.

### (COMPARATIVE EXAMPLE 4-1)

The not-yet-treated metal foil used in Example 4-1 was calcined in air at 700 °C for 30 minutes, thereby obtaining a metal foil of Comparative Example 4-1.

### (COMPARATIVE EXAMPLE 4-2)

The not-yet-treated metal foil used in Example 4-1 was calcined in air at 850 °C for 30 minutes, thereby obtaining a metal foil of Comparative Example 4-2.

### [PERFORMANCE EVALUATIONS]

### (Wettability Test)

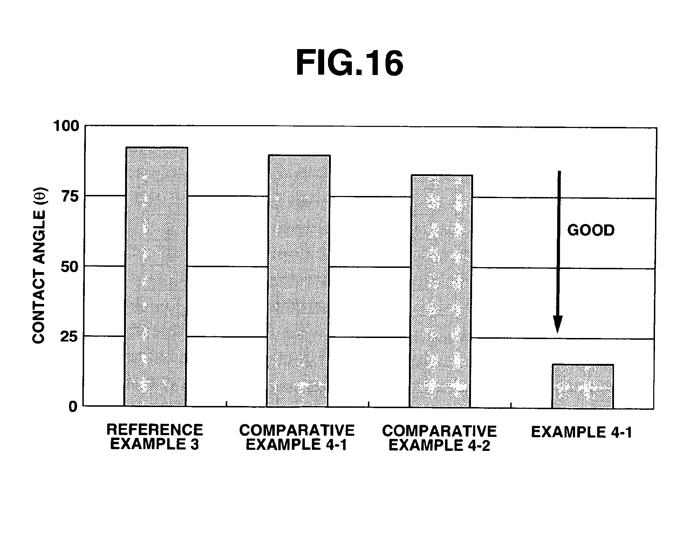

By using each metal foil of the above examples and by employing the following method, a contact angle (θ) was measured. Results obtained therefrom are shown in Fig. 16. Fig. 16 is a graph showing contact angles (θ) of the Examples. "Reference Example 3" is an example obtained by performing the evaluation by using the not-yet-treated metal foil as it is.

### (Test Conditions)

By using a contact angle meter available from Kyowa Interface Science Co., Ltd. under the trade name of CA-X, an experiment in wettability was performed for evaluating the adhesive property. More specifically a test piece of each of the Examples was installed on a measuring apparatus of CA-X type (the contact angle meter available from Kyowa Interface Science Co., Ltd.) and distilled water was dropped on the test piece. Then, a contact angle (θ) of a droplet of water was measured by the contact angle meter.

It is confirmed from Fig. 16 that, in Example 4-1 performed according to the present invention, the contact angle was so sharp as to be excellent in wettability as compared with Comparative Examples 4-1 and 4-2 not performed according to the present invention.

### (Adhesive Property Evaluation 3)

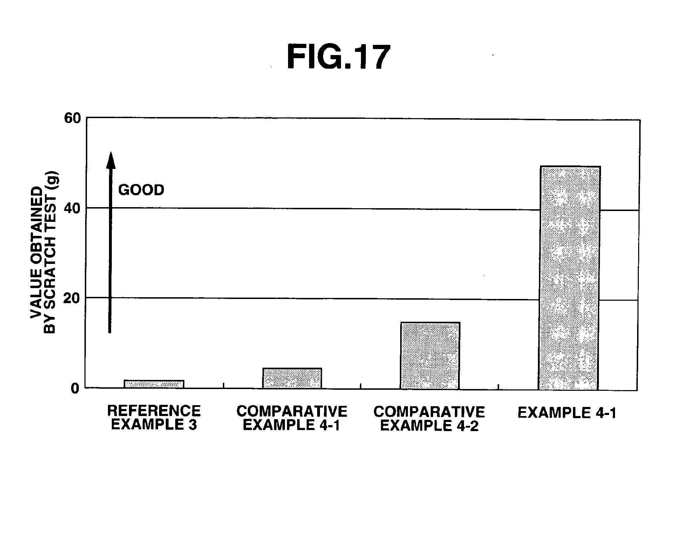

Adhesive property evaluation 3 was conducted by using the metal foils of Example 4-1, Comparative Examples 4-1 and 4-2 and Reference Example 3. The test conditions were similar to those employed in adhesive property evaluation 1. Results obtained therefrom are shown in Fig. 17.
Fig. 17 is a graph showing a weight with which a catalyst layer of each of the Examples was completely peeled off.
Additionally, "Reference Example 3" as shown in Fig. 17 is the example obtained by performing the evaluation by using the metal foil of Reference Example 3 as it is as the metal foil having the catalyst layer.
It is confirmed from Fig. 17 that Example 4-1 performed according to the present invention resulted in a relatively high measurement value and therefore the adhesive property between metal and the catalyst layer is improved as compared with Comparative Examples 4-1 and 4-2 not performed according to the present invention.

### (EXAMPLES 5-1 to 5-3)

A not-yet-treated metal substrate (available from CALSONIC KANSEI CORPORATION), ethanol (concentration: 99 %), and a vessel for accommodating the not-yet-treated metal substrate and the ethanol were prepared. The not-yet-treated metal substrate was immersed in the ethanol held in the vessel, followed by disposing the vessel in a ultrasound treatment apparatus. Upon being subjected to ultrasound treatment (frequency: 25 kHz, time of treatment: 3 minutes, 15 minutes and 30 minutes), the not-yet-treated metal substrate was pulled out of the vessel and then subjected to air-drying for a day, drying at 130 °C for 1 hour, and calcination in air at 400 °C for 30 minutes in order mentioned, thereby obtaining a metal substrate for carrying catalyst of each of Examples 5-1 to 5-3.

### (EXAMPLES 6-1 to 6-3)

A procedure of Examples 5-1 to 5-3 was repeated with the exception that a frequency employed in the ultrasound treatment was changed to 100 kHz, thereby obtaining a metal substrate for carrying catalyst of each of Examples 6-1 to 6-3.

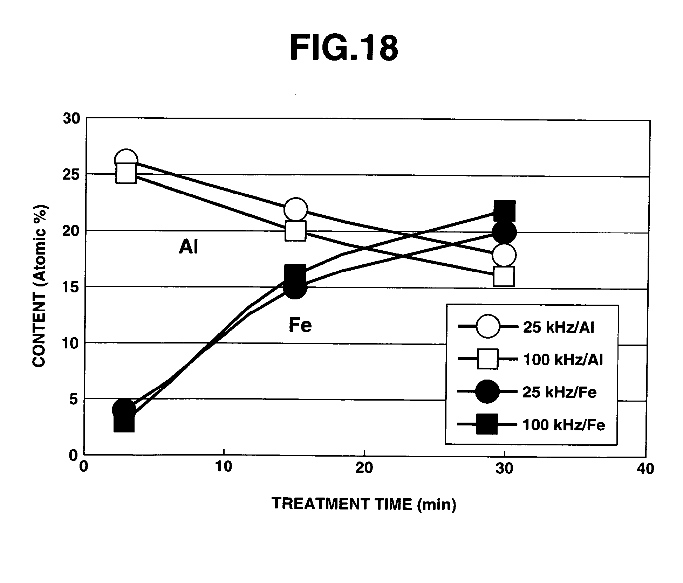

By using metal substrates of the above examples and by applying XPS, an aluminum (Al) content (atomic %) and an iron (Fe) content (atomic %) were measured in a surface portion. Results obtained therefrom are shown in Fig. 18.
Fig. 18 is a graph showing the relationship between a time of treatment and a content of aluminum and iron in a surface portion, concerning each of the Examples.
It is apparent from Fig. 18 that a time of ultrasound treatment is preferably short.

Although the invention has been described above by reference to certain embodiments and examples of the invention, the invention is not limited to the embodiments and examples described above. Modifications and variations of the embodiments and examples described above will occur to those skilled in the art, in light of the above teachings.
For example, although the above-mentioned embodiments were exemplified by the exhaust gas purifying catalyst provided forming the catalyst layer containing a noble metal on the surface of the metal foil, the present invention may be applied to other uses such as a fuel reforming catalyst for use in fuel cells by suitably preparing the components of the catalyst layer.
Additionally, although the coating applied to the metal base was exemplified by the catalyst layer-forming slurry in the above-mentioned embodiments, it is not limited to the catalyst layer-forming slurry. For example, the coating may be a water paint, an oil paint or such as to be applied to a ground metal base. With this, the adhesive property can be improved not only against the water paint, the oil paint or such as to be applied to the ground metal base but also against a formed coat layer or a layer formed of such as to be applied to the ground metal base.

### BRIEF DESCRIPTION OF THE DRAWING

[Fig. 1] An illustration of an embodiment of a method for producing a metal substrate for carrying catalyst of Example 1-1.
[Fig. 2] A photograph of a surface of a metal foil of the metal substrate for carrying catalyst of Example 1-1, taken by SEM.
[Fig. 3] Another photograph of the surface of the metal foil of the metal substrate for carrying catalyst of Example 1-1, taken by SEM.
[Fig. 4] A photograph of a surface of a metal foil of a not-yet-treated metal substrate.
[Fig. 5] A graph showing the relationship between elements detected by XPS and contents thereof in the surface portion of the metal foil, for comparing the metal substrate for carrying catalyst of Example 1-1 with the not-yet-treated metal substrate.
[Fig. 6] A photograph of a surface of a metal foil of a metal substrate for carrying catalyst of Example 1-4, taken by SEM.
[Fig. 7] A photograph of a surface of a metal foil of a metal substrate for carrying catalyst of Example 1-5, taken by SEM.

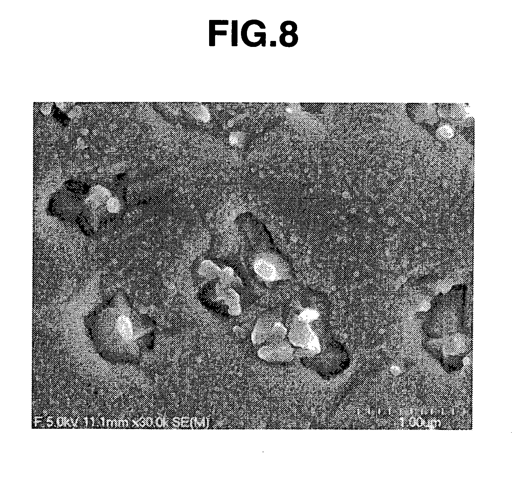

[Fig. 8] A photograph of a surface of a metal foil of a metal substrate for carrying catalyst of Example 1-6, taken by SEM.

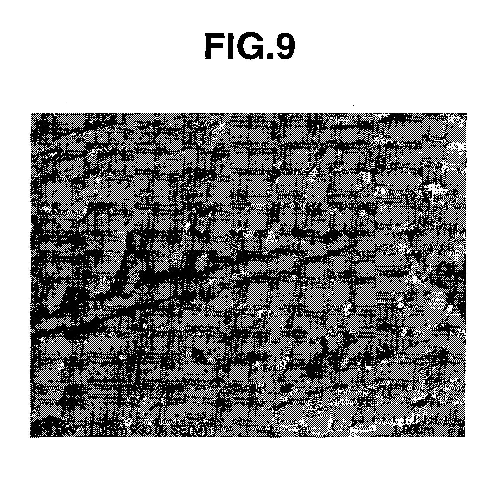

[Fig. 9] A photograph of a surface of a metal foil of a metal substrate for carrying catalyst of Comparative Example 1-1, taken by SEM.

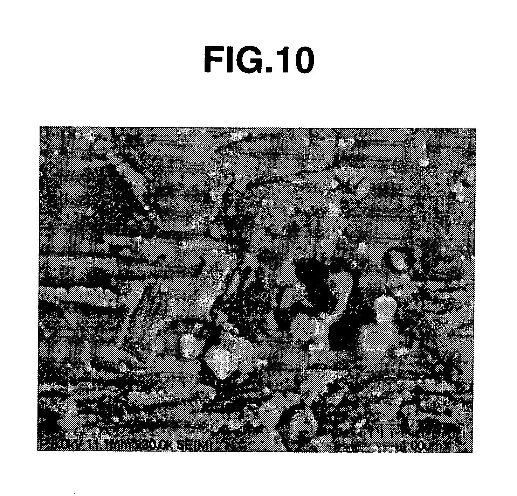

[Fig. 10] A photograph of a surface of a metal foil of a metal substrate for carrying catalyst of Comparative Example 1-2, taken by SEM.
[Fig. 11] A perspective view for explaining the general outlines of an adhesive property evaluation.
[Fig. 12] A graph showing weights with which a catalyst layer of each of the Examples is completely peeled off.
[Fig. 13] A graph showing the relationship between the thickness of the catalyst layer and a NOx conversion rate, concerning each of the Examples.
[Fig. 14] A graph showing the relationship between an aluminum content and an absorbance of hydroxyl groups, concerning each of the Examples.
[Fig. 15A] A result of measuring an aluminum distribution in Example 3-1 by using EPMA.
[Fig. 15B] A result of measuring an aluminum distribution in Reference Example 2 by using EPMA.
[Fig. 16] A graph showing contact angles (θ) of each of the Examples.
[Fig. 17] A graph showing weights with which a catalyst layer of each of the Examples is completely peeled off.
[Fig. 18] A graph showing the relationship between a time of treatment and a content of aluminum and iron in a surface portion, concerning each of the Examples.

### EXPLANATION OF REFERENCE NUMERALS

- 1: Metal Substrate for Carrying Catalyst
- 2: Not-yet-treated Metal Substrate
- 10: Ethanol
- 20: Vessel
- 30: Ultrasound Treatment Apparatus
- 50: Test Sample
- 50A: Catalyst Layer
- 51: Testing Machine Table
- 52: Scratch Stick

## Claims

1. A metal base comprising:
a surface portion containing aluminum,
wherein the metal base is formed with at least either of recesses and projections at a surface of the metal base and therefore has a planar pattern formed by the at least either of the recesses and projections when viewed from above the surface of the metal base,
wherein the planar pattern is a scale-like pattern.

2. A metal base as claimed in Claim 1, wherein the aluminum is contained over whole of the surface portion of the metal base.

3. A metal base as claimed in Claim 1 or 2, wherein the surface portion of the metal base contains hydroxyl groups, an abundance of the hydroxyl groups being not less than 0.01 in terms of an absorbance measured according to an infrared spectroscopic analysis.

4. A metal base as claimed in any one of Claims 1 to 3, wherein the metal base is formed with the at least either of recesses and projections over whole of the surface of the metal base.

5. A metal base as claimed in any one of Claims 1 to 4, wherein the at least either of the recesses and projections which form the scale-like pattern of the metal base have a diameter when formed circularly or have a major axis when formed ovally, of 100 to 500 nm.

6. A metal base as claimed in any one of Claims 1 to 5, wherein the metal base is at least one selected from the group consisting of a metal fiber, a metal foil, a metal filter and a metal substrate.

7. A catalyst comprising:
a metal base as claimed in any one of Claims 1 to 6; and
a catalytic material.

8. A method for producing a metal base as claimed in any one of Claims 1 to 6, comprising:
carrying out a treatment with one of ultrasound and microwaves on a metal base containing at least aluminum, while immersing the metal base in one of an alcohol-based solvent and a hydrocarbon-based solvent.

9. A method for producing a metal base, as claimed in Claim 8, wherein the alcohol-based solvent contains a hydrophilic alcohol.

10. A method for producing a metal base, as claimed in Claim 8 or 9, wherein the alcohol-based solvent contains the hydrophilic alcohol in an amount ranging from 70 to 99 %.

11. A method for producing a metal base, as claimed in Claim 9 or 10, wherein the hydrophilic alcohol is at least one selected from the group consisting of methanol, ethanol, 1-propanol and 2-propanol.

12. A method for producing a metal base, as claimed in any one of Claims 8 to 11, wherein a time of the treatment carried out with the ultrasound or the microwaves is set within a range that an amount of precipitation of iron or chromium is less than that of aluminum.

13. A method for producing a metal base, as claimed in any one of Claims 8 to 12, further comprising:
performing calcination after carrying out the treatment with the ultrasound or the microwaves.

14. A method for producing a metal base, as claimed in Claim 13, wherein the calcination is performed at a calcination temperature of not lower than 800 °C and not higher than a temperature obtained by multiplying a melting point of the metal base containing at least aluminum by 0.9.
